(19) Europäisches Patentamt
European Patent Office
Office européen des brevets

(11) EP 0 691 010 B1

(12) FASCICULE DE BREVET EUROPEEN

(45) Date de publication et mention de la délivrance du brevet: **21.05.1997 Bulletin 1997/21**

(21) Numéro de dépôt: **94911202.3**

(22) Date de dépôt: **22.03.1994**

(51) Int Cl.⁶: **G06T 11/00**

(86) Numéro de dépôt international: **PCT/FR94/00313**

(87) Numéro de publication internationale: **WO 94/22100 (29.09.1994 Gazette 1994/22)**

# (54) PROCEDE DE TRAITEMENT D'UNE IMAGE DANS UN SYSTEME INFORMATISE

VERFAHREN ZUR BILDVERARBEITUNG IN EINEM DATENVERARBEITUNGSSYSTEM

METHOD FOR PROCESSING AN IMAGE IN A COMPUTERIZED SYSTEM

(84) Etats contractants désignés: **AT BE CH DE DK ES FR GB GR IE IT LI LU MC NL PT SE**

(30) Priorité: **25.03.1993 FR 9303455**

(43) Date de publication de la demande: **10.01.1996 Bulletin 1996/02**

(73) Titulaire: **DELEAN, Bruno Camille Roger Jean-Pierre**
**F-31270 Cugnaux (FR)**

(72) Inventeur: **DELEAN, Bruno Camille Roger Jean-Pierre**
**F-31270 Cugnaux (FR)**

(74) Mandataire: **Cabinet HERRBURGER**
**115, Boulevard Haussmann**
**75008 Paris (FR)**

(56) Documents cités:
**EP-A- 0 198 269** **EP-A- 0 462 788**
**EP-A- 0 512 839** **WO-A-92/18938**

- **GERARD J. HOLZMANN 'beyond photography.the digital darkroom' 1988 , PRENTICE HALL SOFTWARE SERIES , USA voir page 27 - page 29; figures 3.29-3.33**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 691 010 B1

## Description

La présente invention concerne un procédé de traitement d'une image dans un système informatisé.

Un tel traitement englobe, de manière très générale, toutes les opérations de traitement que l'on peut effectuer sur une image d'origine. Ces opérations sont des modifications de couleur ou d'aspect d'une partie ou de la totalité de l'image d'origine, des passages de couleur de type passages d'un aérographe, ou encore l'importation dans cette image d'origine, d'images extérieures, qui peuvent elles-mêmes être traitées en combinaison ou séparément avec l'image d'origine.

Il existe différents procédés de traitement d'images mais ces procédés ont tous en commun le fait que chaque opération effectuée sur l'image se traduit par des opérations de calcul transformant les points de l'image d'origine ou de celle résultant de la dernière opération en un ensemble de nouveaux points. De telles opérations sont irréversibles. De plus, et cela constitue l'inconvénient le plus grave de ces procédés connus, l'image en mémoire présente une définition considérablement plus importante que l'image apparaissant sur l'écran de contrôle. Cette définition est nécessaire car l'image à obtenir et servant, par exemple, à l'impression a en général une définition beaucoup plus importante que celle apparaissant à l'écran.

En d'autres termes, toutes les opérations de calcul qui correspondent aux traitements effectués sur l'image d'origine y compris l'importation d'images extérieures, sont des calculs faits sur les pixels de l'image d'origine, et selon la résolution ou définition de cette d'image d'origine ou de l'image à obtenir.

Toute opération effectuée sur l'image nécessite en général une puissance de calcul très importante et, si cette puissance n'est pas disponible, les temps de calcul deviennent prohibitifs. Aussi, les opérations qu'il est possible d'effectuer sur les images sont-elles très limitées. C'est ainsi qu'un passage d'aérographe se traduira par une trace de largeur extrêmement réduite, précisément à cause de la puissance de calcul nécessaire pour calculer la transformation de la zone de l'image concernée.

Le caractère irréversible d'un traitement d'image est un inconvénient particulièrement grave car il exclut pour l'opérateur tout repentir. La correction d'un passage d'aérographe qui ne donne pas le résultat escompté, ne peut être faite que par la superposition d'un nouveau passage et non pas le gommage de l'opération précédente.

Cet inconvénient est d'autant plus grave que le contrôle d'une opération sur l'image apparaissant à l'écran n'est en général pas aussi précis et aussi fiable que le contrôle de l'image de confirmation obtenue en sortie de système, ne serait-ce qu'à cause de la définition extrêmement réduite de l'image de l'écran par opposition à celle du produit final.

Le document GERARD J. HOLZMANN « Beyond photography - chapter 3 - the digital darkroom », 1988, PRENTICE HALL SOFTWARE SERIES, USA, pages 15-29, décrit un procédé de transformation géométrique d'une image photographique.

Ce procédé consiste en une application non biunivoque entre l'image ancienne et l'image nouvelle car un point de l'image ancienne est déplacé pour donner un point de l'image nouvelle par une transformation géométrique de type « modulo ».

Or une telle transformation n'est pas réversible puisqu'un point de destination représente un ensemble de points « modulo » de l'image initiale.

Il ne s'agit pas là d'un échantillonnage de l'image d'origine suivant une grille de résolution.

La réduction éventuelle du nombre de points dans l'image de destination à partir du nombre de points de l'image d'origine, n'est, dans ces conditions, que fortuite du fait de la transformation « modulo ».

Les transformations géométriques, envisagées dans ce document, ne se décomposent pas en des opérations élémentaires récurrentes, simples, et ne limitent, en aucune manière, la puissance de calcul nécessaire au traitement de l'image.

En résumé, les techniques connues de traitement d'une image par un système informatisé en vue de l'obtention d'une image de définition très poussée pour la préparation de films d'impression, présentent le double inconvénient de nécessiter des puissances de calcul importantes et d'être des opérations irréversibles.

La présente invention a pour but de créer un procédé de traitement informatisé d'une image permettant d'effectuer des opérations extrêmement poussées, rapidement, de façon réversible et cela sans que cela ne soit au détriment de la précision ou résolution ce l'image finale à obtenir.

A cet effet, l'invention concerne un procédé de traitement informatisé d'une image caractérisé en ce que :

- on échantillonne l'image d'origine, à traiter, suivant une grille de résolution en ne retenant de cet ensemble de points de cette image, qu'un nombre de points au plus égal à celui des points qui peuvent être affichés sur l'écran de contrôle,
- on décompose le traitement à effectuer sur l'image en des opérations élémentaires récurrentes décomposées chacune en trois parties et donnant, à partir du résultat de l'opération élémentaire précédente (couche i-1) un nouveau résultat (couche i), ces trois parties ajoutées l'une à l'autre représentant :

- l'une, la reprise dans la nouvelle couche (i) d'un point (x,y) de couleur de l'ancienne couche (i-1) avec une pondération ($\alpha_i$) allant de 0 à 100 % en valeurs positives ou négatives,
- l'autre partie représentant l'importation d'une image extérieure (Ii) dans la couche i, c'est-à-dire l'importance d'un point de couleur de l'image (Ii), après transformation chromatique et géométrique [Pi(x,y)] de ce point pour l'ajouter au point de couleur (x,y) de la couche (i), l'importance du remplacement de point de la couche (i) par ce point importé de l'image (Ii) étant définie par un scalaire [$\beta_i$(x,y)] présentant des valeurs de 0 à 100 % positives ou négatives,

- la troisième partie étant une modification chromatique [$\gamma_i$(x,y)] que l'on effectue sur le point (x,y) de la couche (i), chaque opération élémentaire (i) étant définie par l'équation tenant compte de l'opération élémentaire précédente (i-1) :

$$\varphi_i(x,y) = \alpha_i(x,y) \cdot \varphi_{i-1}(x,y) + \beta_i(x,y) \cdot I_i[P_i(x,y)] + \gamma_i(x,y)$$

dans laquelle :

| | |
|---|---|
| $\alpha_i(x,y)$ | est une fonction scalaire du point (x,y) traduisant la présence en ce point de l'image résultant de l'opération élémentaire antérieure $\varphi_{i-1}(x,y)$, |
| $\varphi_{i-1}(x,y)$ | est une fonction représentant l'opération élémentaire antérieure, |
| $\beta_i(x,y)$ | est une fonction scalaire traduisant la présence au point (x,y) du point correspondant à l'image importée, |
| Ii | représente l'image importée constituée par une fonction chromatique définie en un ensemble de points, |
| Pi(x,y) | est la fonction d'importation d'image représentant le transfert géométrique d'un point de l'ensemble des points de l'image vers la couche (i) à laquelle est appliquée l'opération élémentaire $\varphi_i(x,y)$, |
| Ii[Pi(x,y)] | est la fonction composée traduisant l'importation de l'image, |
| $\gamma_i(x,y)$ | est une fonction homogène à une fonction chromatique représentant une fonction de transformation de couleur effectuée sur le point (x,y), cette fonction pouvant prendre des valeurs en dehors de l'espace chromatique (valeur négative), |

chacun des termes $\beta_i$Ii[Pi(x,y)] et $\gamma_i(x,y)$ pouvant être une fonction nulle alors que le terme $\alpha_i(x,y)$ $\varphi_{i-1}(x,y)$ n'est jamais une fonction nulle pour tous les points (x,y)

- on compose les opérations élémentaires pour obtenir une fonction représentant les i premières opérations élémentaires pour obtenir une fonction dont les paramètres sont définis en tous les points de la grille de résolution

$$\sum_{j=1}^{j=q} \alpha_j(x,y) \cdot I_j[P_j(x,y)] + \gamma(x,y) \qquad (2)$$

q = nombre d'images importées,

dans cette fonction globale :

| | |
|---|---|
| $\alpha_j(x,y)$ | est un scalaire analogue au scalaire $\alpha_i(x,y)$ d'une fonction élémentaire, |
| $I_j$ | représente une image j à importer, |
| $P_j(x,y)$ | est une fonction d'importation analogue aux fonctions d'importation précédents Pi(x,y), |
| $\gamma(x,y)$ | est une fonction chromatique analogue aux fonctions chromatiques $\gamma_i(x,y)$, |

- on recalcule en des points intermédiaires la fonction globale par interpolation fonctionnelle de la fonction globale définie aux points de la grille de résolution, c'est-à-dire les fonctions $\alpha_j$, $P_j$, $\gamma$ et on maintient les fonctions $I_j$, ces points intermédiaires dépendant de la résolution que doit présenter l'image à obtenir,
- toutes les opérations étant effectuées jusqu'à ce moment sur les fonctions et pour obtenir l'image finale, on calcule les pixels en chaque point à obtenir, en calculant la valeur de la fonction en ces points (données).

Le procédé selon l'invention permet un traitement particulièrement efficace d'une image avec des possibilités inattendues quant à l'importance des opérations élémentaires à effectuer sur une image et cela avec une puissance de calcul extrêmement réduite ; il permet à l'opérateur de suivre l'évolution de l'image au fur et à mesure des opérations effectuées et de façon quasi instantanée. De plus, l'opérateur peut, à tout instant, revenir sur une opération élémentaire et cela d'une manière pratiquement instantanée puisque les différentes opérations ou leur résultat, c'est-à-dire les couches, sont définis par des équations très simples, ne demandant que très peu de place de mémoire, et que la fonction faisant la synthèse des opérations exécutées jusqu'à ce moment correspond également à une fonction de structure extrêmement simple.

Ainsi, le procédé selon l'invention permet toutes opérations de création d'images, des effets de retouche, de type trace d'aérographe, des accentuations de définition ou accentuations de contour, des effets de fondu, des modifications de couleur, c'est-à-dire toutes opérations traitant la couleur des images. L'invention permet également des transformations ou des modifications géométriques, telles que des rotations, des changements d'échelles, homothéties ou des anamorphoses. Ces opérations apparaissent, en temps réel, à l'opérateur ; celui-ci utilise, en général, une souris ou un stylet sur une table traçante interactive ; ce stylet fournit deux types de signaux de commande, l'un des signaux est un signal de position (coordonnée x,y) du point concerné et, le cas échéant, de l'environnement de ce point, comme par exemple la trace d'un aérographe, et d'autre part la pression du stylet sur la table constitue un second signal utilisé pour la retouche de l'image ; dans le cas de l'aérographe, il s'agira par exemple de la densité de la couleur "projetée".

Chaque opération élémentaire est identifiée séparément et peut être retrouvée à tout moment en mémoire. la somme de toutes les opérations élémentaires jusqu'à la dernière est formée au fur et à mesure de l'évolution du travail. Ainsi, l'opérateur peut accéder à tout moment soit au résultat global des opérations effectuées jusqu'à ce moment, soit à des opérations intermédiaires identifiées dans des couches. Il peut alors intervenir sur une couche sans que les fonctions définissant les autres couches ne soient directement concernées ; la liaison entre les différentes couches se situe seulement au niveau de la récurrence.

A la fin des opérations, pour éditer l'image finale ou l'image intermédiaire à une résolution choisie, l'opérateur commande une interpolation fonctionnelle à la résolution de l'image à obtenir. Lorsque la fonction est ainsi définie en tous les points nécessaires à la résolution choisie, le système calcule les pixels en ces différents points à l'aide des fonctions obtenues par interpolation.

Il convient de remarquer que le nombre de points (noeuds) auxquels il est nécessaire de définir les fonctions élémentaires et la fonction globale est, en général, relativement réduit puisque la fonction $\varphi_i$ évolue avec peu de variations (sa dérivée seconde est en général très faible pour la plupart des points de l'image). Ce n'est qu'en des points particuliers correspondant à une transition de couleur très importante que la fonction $\varphi_i$ varie fortement.

La grille choisie pour la définition des fonctions élémentaires peut être une grille régulière. Il peut également s'agir d'une grille dont le maillage est différent d'une zone à l'autre, suivant que la zone de l'image correspond à une variation faible ou à une variation forte de la nature de l'image.

Cela facilite le traitement et la correction.

Même si l'image finale n'est pas satisfaisante, lorsque le contrôle est réalisé, qu'une épreuve a été par exemple tirée, il est possible très simple de revenir sur les étapes intermédiaires et corriger.

La présente invention sera décrite ci-après de manière plus détaillée à l'aide de différents exemples de mise en oeuvre du procédé.

De façon générale, l'invention a pour but de traiter une image, c'est-à-dire les données définissant cette image qui sont obtenues par exemple par scannérisation d'un film, d'une image imprimée, etc...

La résolution de cette scannérisation est choisie en fonction de l'image finale à obtenir. Comme il s'agit, en général, de films destinés à une impression polychrome ou monochrome, cette résolution doit être très grande.

On échantillonne cet ensemble important de données avec une résolution correspondant à celle de l'écran de contrôle utilisé par l'opérateur pour effectuer ses traitements sur l'image. Cet écran de contrôle a toujours une définition très faible par rapport à la définition de l'image d'origine ou de l'image à obtenir. L'échantillonnage de l'image d'origine se fait selon une grille dont les points des sommets ou noeuds correspondent à une partie des points ou pixels que l'on affichera sur l'écran. Seules les données de l'image d'origine correspondant à ces noeuds seront utilisées pour les opérations de traitement intermédiaires ou opérations élémentaires.

Le résultat de chaque opération élémentaire i sera appelé, de façon imagée, la couche i. Le résultat intermédiaire correspondant à toutes les opérations effectuées, y compris la dernière, jusqu'à la couche i peut être affiché pour le contrôle sur l'écran. En fait, selon l'invention, le résultat d'une opération intermédiaire, en cours, apparaît au fur et à mesure de son exécution en temps réel.

Ce n'est qu'après que toutes les opérations élémentaires auront été effectuées de manière satisfaisante, que l'opérateur décidera de créer l'image finale et pour cela il utilisera les données de l'image origine suivant la résolution nécessaire à l'obtention de l'image finale.

Le résultat d'une opération élémentaire sur l'image affichée ou éditée est en fait le résultat de la somme de toutes les opérations élémentaires précédentes.

Les fonctions représentant les opérations élémentaires sont sommées pour n'aboutir qu'à une seule fonction globale de même forme que les fonctions des opérations élémentaires. Comme les fonctions des opérations élémentaires ne sont définies qu'en un nombre limité de points (c'est-à-dire aux noeuds choisis) la combinaison des fonctions se fera seulement aux noeuds.

Pour l'édition de l'image, soit pour l'affichage sur l'écran de contrôle, soit par exemple pour la fabrication d'épreuve finale, selon l'invention, on calcule par interpolation de fonction la valeur de la fonction globale en chaque point (x,y) où il faut créer un pixel suivant la résolution de cette édition.

Par convention, dans la présente description, il sera fait mention d'image finale bien que cette image finale se composera, en général, de trois images correspondant aux couleurs élémentaires dans le cas d'une impression polychrome, avec en plus, éventuellement, une image pour les gris.

Selon l'invention, le traitement à effectuer sur l'image englobe des opérations extrêmement différentes chromatiques et géométriques telles que des passages de brosse (aérographe), des modifications de nuances ou d'intensité de teintes ou encore des changements de teintes ou des transformations géométriques, se rapportant à l'ensemble ou à une partie seulement de l'image. Ce traitement peut également comporter l'importation d'images extérieures à la manière d'un collage. L'image ainsi composée peut, elle-même, être transformée.

Le traitement peut également concerner la géométrie de l'image ou d'une partie de celle-ci. L'opérateur peut ainsi effectuer des déformations de l'image pour donner une impression de mouvement, réaliser des déformations de type anamorphose, etc...

Les opérations peuvent également consister à créer des fonds ou des surimpressions d'ensemble tels que des ciels, nuages, des effets d'eau, de rivière, de vagues ; des effets de fumées ou de brume, de pluie, de neige ; des effets de soleil, de jour, de nuit ; des images floues ou très contrastées et de multiples combinaisons de ces effets.

Chaque opération élémentaire correspond ainsi à une "couche" de l'image, à la manière d'une peinture à l'huile.

Cette opération élémentaire est définie par l'équation générale suivante associée à la couche i. Cette fonction générale est la suivante :

$$(1) \qquad \varphi_i(x,y) = \alpha_i(x,y) \cdot \varphi_{i-1}(x,y) + \beta_i(x,y)\, I_i[P_i(x,y,)] + \gamma_i(x,y)$$

Cette fonction s'applique à un point ou pixel de coordonnées x, y dans le plan de référence. En fait, et comme cela a été indiqué ci-dessus, les variables X et Y varient de manière discontinue puisque le traitement se rapporte uniquement aux noeuds de la grille.

La fonction $\varphi_i$ (x,y) est la transformation numéro i qui sera effectuée sur le point de coordonnées x, y.

Cette fonction générale est récurrente car elle tient compte de l'image existant dans la couche i-1. Cette image est définie par la fonction $\varphi_{i-1}$ (x,y).

Cette fonction prévoit également l'importation d'une image extérieure $I_i$. Cette fonction importation est définie par un scalaire $\beta_i$(x,y) qui indique la présence ou l'absence, totales ou partielles, d'un point de l'image importée $I_i$ à l'emplacement (x,y).

La fonction importation $P_i$(x,y) définit l'opération d'importation. Il s'agit, en général, d'une opération géométrique effectuée sur les points de l'image à importer $I_i$ pour la placer dans la couche i.

Cette fonction importation $P_i$ peut être une simple translation, une homothétie, une rotation ou une combinaison d'opérations y compris une déformation du type anamorphose.

Enfin, le dernier terme de la fonction $\gamma_i$ (x,y) est la modification chromatique du point (x,y) dans la couche i.

Ainsi, la fonction $\varphi_i$(x,y) définit la transformation du point de coordonnées (x,y) suivant l'opération élémentaire à effectuer. Cette transformation modifie l'état ancien du point (couche i-1) obtenu par la fonction $\varphi_{i-1}$ pour ajouter à ce point des éléments du point de l'image importée $I_i$ et une éventuelle modification chromatique par le terme $\gamma_i$.

Suivant les opérations élémentaires effectuées, les valeurs des scalaires des deux premiers termes seront différentes, dans certains cas complémentaires ; le troisième terme peut être nul dans certains cas.

Dans un but de simplification, on considèrera que la première couche (i = 1) est une feuille vierge sans image et dont la teinte est, par exemple, uniforme $\gamma 0$.

Selon l'invention, on considère que l'image à traiter est une image que l'on importe, aussi, la seconde couche (i = 2) peut consister à importer l'image d'origine ($I_0$).

Si les opérations suivantes se limitent au traitement de cette image d'origine, il n'y aura pas d'autre image à importer. Par contre, si cette image d'origine doit être complétée par l'incrustation d'images avec transparence ou non ou de parties d'image à la manière d'un collage, il y aura d'autres images importées $I_i$.

Pour afficher le résultat intermédiaire, c'est-à-dire la transformation de l'image qui résulte des opérations élémentaires, c'est-à-dire pour toutes les couches élémentaires de 1 à i, on fait la somme des couches i et on obtient une équation générale correspondant à la synthèse des couches. Cette équation générale a la forme suivante :

$$\sum_{j=1}^{j=q} \alpha_j(x,y) \cdot I_j[P_j(x,y)] + \gamma(x,y) \qquad (2)$$

q = nombre d'images importées,

Il est remarquable que cette équation générale présente une forme extrêmement simple, égale à la somme des termes relatifs aux images importées et du coefficient chromatique. Ainsi, dans le cas de trois images importées, la fonction générale se limitera au plus à quatre termes. Une telle expression générale, très simple, n'occupe qu'une place très réduite dans la mémoire et le recalcul de tous les points de l'image finale se fait également de manière simple par le calcul des paramètres de l'équation générale aux différents points nécessaires à l'image finale ou image intermédiaire.

S'il s'agit d'afficher l'image intermédiaire sur l'écran de contrôle, ce qui est une opération nécessaire à l'opérateur et qui se fait automatiquement, le nombre de noeuds de la grille de définition étant très réduit, l'image intermédiaire, résultat de l'opération élémentaire, apparaît pratiquement instantanément sur l'écran de contrôle au fur et à mesure qu'elle s'effectue.

Dans le cas de l'image finale, destinée par exemple à la réalisation des films d'impression, comme la résolution est très nettement supérieure, le temps de calcul est plus long mais il n'est pas prohibitif. L'opérateur peut alors contrôler le résultat final à la définition de l'image finale. Si ce résultat n'est pas satisfaisant, il peut revenir sur les couches i et modifier telle ou telle opération élémentaire puisqu'il peut accéder immédiatement à une opération élémentaire, celle-ci étant définie par une fonction inscrite en mémoire.

Lorsque l'opérateur aura corrigé ou modifié la couche concernée, il pourra, de nouveau, faire très simplement la synthèse des couches pour obtenir l'image finale et vérifier sur l'épreuve, le résultat de sa correction, de préférence au seul affichage sur l'écran de contrôle qui, dans l'hypothèse évoquée, serait insuffisant.

De manière plus détaillée, les différentes opérations élémentaires peuvent être celles déjà évoquées ci-dessus. La description se limitera ci-après, à titre d'exemple, à quelques opérations élémentaires, sachant que les possibilités sont pratiquement illimitées bien que l'écriture d'une opération élémentaire se réduise à une équation très simple.

Tout d'abord, pour l'établissement de la grille, plutôt que de choisir une grille ayant la résolution des pixels de l'écran de contrôle, on choisit une grille de résolution quatre fois moindre. On ne retiendra, comme points, que les sommets de quadrilatère dont les côtés correspondent à quatre pixels. Ces sommets sont appelés par définition des noeuds et le quadrilatère une maille.

1°) <u>Opération aérographe</u> :

Cette opération consiste à réaliser une trace avec une couleur. Cette trace imitant une trace d'aérographe, d'apparence continue, peut être considérée comme une succession de taches de couleur réalisées par un jet d'aérographe. La répartition de la densité de la couleur d'une tache d'aérographe est une fonction de Gauss. Cela signifie que l'intensité de la couleur maximale au centre de la tache va en décroissant vers l'extérieur suivant une fonction de Gauss. L'intensité maximale dépend, dans le cas d'un aérographe réel, de la pression de commande exercée sur la gâchette et qui ouvre la sortie d'encre dans le jet d'air. Une telle trace et une telle pression peuvent être simulées dans un système informatisé en représentant, comme déjà indiqué, une tache d'aérographe par un cercle de couleur dont la densité entre les bords et le centre varie suivant une fonction de Gauss. La saturation de la teinte au centre de la tache peut varier de 0 à 1 (ou de 0 à 100 %).

En résumé, un trait d'aérographe est une succession de disques de couleur dont on peut modifier la tracée (lieu des centres des disques) et la densité de la couleur.

A partir de l'équation générale (1) et des conditions caractérisant l'aérographe :

$$\begin{cases} \varphi_i(x,y) = \alpha_i(x,y)\varphi_{i-1}(x,y) + \gamma_i(x,y) \\ \beta_i(x,y) = 0 \ \forall (x,y) \\ \gamma_i(x,y) = [1-\alpha_i(x,y)] \cdot C \\ C = \text{constante de couleur du "produit projeté",} \end{cases}$$

cette équation devient la suivante :

$$\varphi_i(x,y) = \alpha_i(x,y)\varphi_{i-1}(x,y) + [1-\alpha_i(x,y)]\cdot C$$

Comme dans le passage de l'aérographe, il n'y a pas d'importation d'une image extérieure, le coefficient de présence $\beta_i$ d'une image extérieure est nul pour tous les points de la couche.

L'opération de passage de l'aérographe consiste à remplacer partiellement ou totalement la teinte antérieure d'un point par la teinte du "produit projeté" par l'aérographe. De ce fait, la fonction chromatique $\gamma_i$ (x,y) s'exprime en fonction d'une teinte C et du complément à 1 du coefficient de présence $\alpha_i$ de l'image antérieure, c'est-à-dire :

$$\bar{\alpha}_i = 1 - \alpha_i .$$

Le choix du scalaire $\alpha_i(x,y)$ en chaque point traduit la densité de couleur laissée par l'aérographe.

La fonction de présence de couleur $\alpha_i(x,y)$ peut se représenter par une fonction de Gauss centrée en un point, limitée par exemple au bord du disque 10 % du maximum. En d'autres termes, on supprime les extrémités des deux branches de la courbe de Gauss par exemple au-delà de 10 % ou de tout autre pourcentage choisi. Cela se traduit en réalité par le fait que la fonction de Gauss ne sera pas appliquée aux points situés au-delà du rayon ainsi choisi pour le disque.

2°) Fusion d'une image :

Cette opération consiste à importer une image extérieure dans une image existante. Partant de l'équation générale, cette opération d'importation se définit comme suit :

Dans l'équation générale (1) à laquelle on applique les conditions particulières de cette opération :

$$\begin{cases} \varphi_i(x,y) = \alpha_i(x,y)\varphi_{i-1}(x,y) + \beta_i(x,y)I_i[P_i(x,y)] \\ \gamma_i(x,y) = 0 \\ \beta_i(x,y) = [1-\alpha_i(x,y)] = \bar{\alpha}_i, \end{cases}$$

La fonction chromatique $\gamma_i$ est nulle et les coefficients $\alpha_i$ et $\beta_i$ sont des coefficients complémentaires (leur somme est égale à l'unité). En effet, par hypothèse, pour ce genre d'opération, un point de l'image importée remplace plus ou moins, voire totalement, un point de l'image antérieure. Cela correspond dans un cas à un fondu plus ou moins prononcé et dans l'autre au remplacement de l'image ancienne par l'image importée.

L'équation ci-dessus se simplifie et donne ainsi l'équation de la fusion d'une image :

$$\varphi_i(x,y) = \alpha_i(x,y)\ \varphi_{i-1}(x,y) + \bar{\alpha}_i(x,y)\ I_i[P_i(x,y)].$$

3°) Eclaircissement/assombrissement :

Il convient de remarquer que dans l'équation générale d'une couche i, le scalaire $\alpha_i$ n'est jamais nul en tous les points de la couche. Par contre, s'il n'y a pas importation d'image, le scalaire $\beta_i$ est nul pour tout (x,y).

S'il s'agit maintenant d'éclaircir ou d'assombrir une image, on jouera sur la fonction chromatique $\gamma_i(x, y)$. Comme indiqué ci-dessus, la fonction générale $\varphi_i(x, y)$ ne limite jamais à la fonction chromatique car cela consisterait à supprimer toutes les images des couches 1 à i-1 (disparition de $\varphi_{i-1}$), c'est-à-dire de la récurrence.

La fonction d'assombrissement ou d'éclaircissement consiste ainsi, selon l'équation propre à cette opération, à ajouter une teinte à la teinte du point x, y antérieur (fonction de $\varphi_{i-1}$).

A partir de l'équation générale (1), rappelée ci-après :

$$\varphi_i(x,y) = \alpha_i(x,y) \cdot \varphi_{i-1}(x,y) + \beta_i(x,y)\ I_i[P_i(x,y,)] + \gamma_i(x,y)$$

dans laquelle on pose :

$$\begin{cases} \alpha_i(x,y) = 1 \ \forall(x,y) \\ \beta_i(x,y) = 0 \ \forall(x,y) \end{cases}$$

On obtient alors :

$$\varphi_i(x,y) = \varphi_{i-1}(x,y) + \gamma_i(x,y)$$

4°) Déformation/anamorphose :

Cette opération s'applique à une image importée. En fait, s'il faut transformer une partie de l'image de la couche (i-1), on considérera cette partie d'image comme une image importée pour la traiter comme cela va être décrit ci-après.

La déformation de l'image ou anamorphose consiste à associer à chaque noeud, un vecteur de déformation dont l'orientation et l'amplitude correspondent à la déformation à obtenir. Si cette déformation est uniforme sur toute la partie de l'image concernée, cela se traduira par des vecteurs de même direction et de même amplitude associés à chaque noeud et qui déplaceront le point correspondant à chaque noeud d'une translation élémentaire définie par chaque vecteur.

Pour une telle déformation, la fonction générale de la couche i devient la suivante en reprenant l'équation définissant l'importation d'une image :

$$\varphi_i(x,y) = \alpha_i(x,y)\varphi_{i-1}(x,y) + \bar{\alpha}_i(x,y)I_i[P_i(x,y)].$$

La déformation ou l'anamorphose consiste à travailler sur la fonction d'importation $P_i(x,y)$.

5°) Modification du contraste :

On peut modifier le contraste d'une image de manière positive ou négative, c'est-à-dire en accentuant le contraste et en faisant ressortir de manière plus importante certains détails ; dans le cas contraire, celui du floutage, on nivelle l'image et on atténue le contraste.

La fonction de cette opération élémentaire est la suivante :

$$\varphi_i(x,y) = \alpha_i \ \varphi_{i-1}(x,y) + \gamma$$

Dans cette fonction élémentaire $\gamma$ est une fonction de la forme :

$$\gamma = \bar{\alpha}_i \ C$$

relation dans laquelle $\bar{\alpha}_i$ est le complément à l'unité de $\alpha_i$ et C est la valeur d'une fonction moyenne sur la couche correspondant à l'opération $\varphi_{i-1}$ ; cette fonction moyenne correspond, en quelque sorte, à la valeur moyenne de la fonction au voisinage du point (x,y).

Le scalaire $\bar{\alpha}_i$ peut correspondre à une fonction positive, négative ou nulle.

Pour $\bar{\alpha}_i = 0$, on conserve la couche précédente puisque $\alpha = 1$.

Si $\bar{\alpha}$ est supérieur à 0 (valeur faible), cela signifie que l'on ajoute à la couche précédente, une valeur moyenne. Cela correspond à un floutage. Il est évident que ce floutage augmente lorsque le scalaire $\bar{\alpha}$ augmente.

Au cas contraire, si $\bar{\alpha}$ est négatif, on retranche une valeur moyenne de la fonction précédente de l'image, c'est-à-dire que l'on enlève le flou et que l'on accentue le contraste.

## Revendications

1. Procédé de traitement d'une image dans un système informatique en vue de l'obtention d'une image destinée à l'affichage ou à l'impression, selon lequel le contrôle de chaque opération élémentaire se fait par affichage du résultat de cette opération sur un écran de contrôle, procédé caractérisé en ce que :

- on échantillonne l'image d'origine, à traiter, suivant une grille de résolution en ne retenant de cet ensemble de points de cette image, qu'un nombre de points au plus égal à celui des points qui peuvent être affichés sur l'écran de contrôle,
- on décompose le traitement à effectuer sur l'image en des opérations élémentaires récurrentes décomposées chacune en trois parties et donnant, à partir du résultat de l'opération élémentaire précédente (couche i-1) un nouveau résultat (couche i), ces trois parties ajoutées l'une à l'autre représentant :

  - l'une, la reprise dans la nouvelle couche (i) d'un point (x,y) de couleur de l'ancienne couche (i-1) avec une pondération ($\alpha_i$) allant de 0 à 100 % en valeurs positives ou négatives,
  - l'autre partie représentant l'importation d'une image extérieure (Ii) dans la couche i, c'est-à-dire l'importation d'un point de couleur de l'image (Ii), après transformation chromatique et géométrique [Pi(x,y)] de ce point pour l'ajouter au point de couleur (x,y) de la couche (i), l'importance du remplacement de ce point de la couche (i) par ce point importé de l'image (Ii) étant définie par un scalaire [$\beta_i$(x,y)] présentant des valeurs de 0 à 100 % positives ou négatives,
  - la troisième partie étant une modification chromatique [$\gamma_i$(x,y)] que l'on effectue sur le point (x,y) de la couche (i),

  chaque opération élémentaire (i) étant définie par l'équation tenant compte de l'opération élémentaire précédente (i-1) :

$$\varphi_i(x,y) = \alpha_i(x,y) \cdot \varphi_{i-1}(x,y) + \beta_i(x,y) \cdot I_i[P_i(x,y)] + \gamma_i(x,y)$$

  dans laquelle :

| | |
|---|---|
| $\alpha_i(x,y)$ | est une fonction scalaire du point (x,y) traduisant la présence en ce point de l'image résultant de l'opération élémentaire antérieure $\varphi_{i-1}(x,y)$, |
| $\varphi_{i-1}(x,y)$ | est une fonction représentant l'opération élémentaire antérieure, |
| $\beta_i(x,y)$ | est une fonction scalaire traduisant la présence au point (x,y) du point correspondant à l'image importée, |
| Ii | représente l'image importée constituée par une fonction chromatique définie en un ensemble de points, |
| Pi(x,y) | est la fonction d'importation d'image représentant le transfert chromatique géométrique d'un point de l'ensemble des points de l'image vers la couche (i) à laquelle est appliquée l'opération élémentaire $\varphi_i(x,y)$, |
| Ii[Pi(x,y)] | est la fonction composée traduisant l'importation de l'image, |
| $\gamma_i(x,y)$ | est une fonction homogène à une fonction chromatique représentant une fonction de transformation de couleur effectuée sur le point (x,y), cette fonction pouvant prendre des valeurs en dehors de l'espace chromatique (valeur négative), |

  chacun des termes $\beta_i$Ii[Pi(x,y)] et $\gamma_i(x,y)$ pouvant être une fonction nulle alors que le terme $\alpha_i(x,y)\ \varphi_{i-1}(x,y)$ n'est jamais une fonction nulle pour tous les points (x,y)
- on compose les opérations élémentaires pour obtenir une fonction représentant les i premières opérations élémentaires pour obtenir une fonction dont les paramètres sont définis en tous les points de la grille de résolution

$$\sum_{j=1}^{j=q} \alpha_j(x,y) \cdot I_j[P_j(x,y)] + \gamma(x,y) \qquad (2)$$

q = nombre d'images importées,
dans cette fonction globale :

$\alpha_j(x,y)$ est un scalaire analogue au scalaire $\alpha_i(x,y)$ d'une fonction élémentaire,
$I_j$ représente une image j à importer,
$P_j(x,y)$ est une fonction d'importation analogue aux fonctions d'importation précédents Pi(x,y),
$\gamma(x,y)$ est une fonction chromatique analogue aux fonctions chromatiques $\gamma_i(x,y)$,

- on recalcule en des points intermédiaires la fonction globale par interpolation fonctionnelle de la fonction globale définie aux points de la grille de résolution, c'est-à-dire les fonctions $\alpha_j$, $P_j$, $\gamma$ et on maintient les fonctions $I_j$, ces points intermédiaires dépendant de la résolution que doit présenter l'image à obtenir,
- toutes les opérations étant effectuées jusqu'à ce moment sur les fonctions et pour obtenir l'image finale, on calcule les pixels en chaque point à obtenir, en calculant la valeur de la fonction en ces points (données).

**Patentansprüche**

**1.** Verfahren zur Bildverarbeitung in einem Datenverarbeitungssystem zur Erzielung eines Bildes, das zur Sichtanzeige oder zum Druck bestimmt ist, bei welchem die Steuerung jeder Elementaroperation durch Sichtanzeige des Resultats dieser Operation auf einem Kontrollbildschirm gebracht wird, und wobei das Verfahren dadurch gekennzeichnet ist, daß:

- man Probewerte des zu verarbeitenden Ausgangsbildes gemäß einem Auflösungsgitter nimmt, indem man von dieser Gesamtheit von Punkten dieses Bildes nur eine Anzahl von Punkten zurückhält, die höchstens gleich derjenigen der Punkte ist, die auf dem Kontrollbildschirm sichtbar gemacht werden,
- man die Verarbeitung zerlegt, um am Bild wiederkehrende Elementaroperationen durchzuführen, die jeweils in drei Teile zerlegt sind und ausgehend vom Resultat der vorangehenden Elementaroperation (Lage oder couche i-1) ein neues Resultat (Lage i) ergeben, wobei diese drei aneinander angefügten Teile darstellen:
  - der erste die Wiederaufnahme in die neue Lage (i) eines Farbpunktes (x,y) der alten Lage (i-1) mit einer Gewichtung ($\alpha_i$), die in positiven oder negativen Werten von 0 bis 100% geht,
  - der zweite Teil die Einführung eines äußeren Bildes (Ii) in die Lage (i), d.h. die Einführung eines Farbpunktes des Bildes (Ii) nach chromatischer und geometrischer Transformation [Pi(x,y)] dieses Punktes, um ihn dem Farbpunkt (x,y) der Lage (i) hinzuzufügen, wobei die Bedeutung des Ersetzens dieses Punktes der Lage (i) durch diesen vom Bild (Ii) eingeführten Punkt durch einen Skalar [$\beta_i(x,y)$] definiert ist, welcher positive oder negative Werte von 0 bis 100% annimmt,
  - der dritte Teil eine chromatische Modifikation [$\gamma_i(x,y)$], die man am Punkt (x,y) der Lage (i) vornimmt,

wobei jede Elementaroperation (i) unter Berücksichtigung der vorangehenden Elementaroperation (i-1) durch die Gleichung definiert ist:

$$\varphi_i(x,y) = \alpha_i(x,y) \cdot \varphi_{i-1}(x,y) + \beta_i(x,y) \cdot I_i[P_i(x,y)] + \gamma_i(x,y)$$

in welcher:

$\alpha_i(x,y)$ eine skalare Funktion des Punktes (x,y) ist, welche das Vorhandensein des aus der vorangehenden Elementar-operation $\varphi_{i-1}(x,y)$ resultierenden Bildes in diesem Punkt umsetzt,
$\varphi_{i-1}(x, y)$ eine Fuktion ist, welche die vorangehende Elementaroperation darstellt,
$\beta_i(x,y)$ eine skalare Funktion ist, welche die Anwesenheit des dem eingeführten Bild entsprechenden Punktes im Punkt (x,y) umsetzt,
Ii dem eingeführten Bild entspricht, das aus einer chromatischen Funktion besteht, die als eine Gesamtheit von Punkten definiert ist,
Pi(x,y) die Funktion der Bildeinführung ist, welche die chromatisch-geometrische Übertragung eines Punktes der Gesamtheit von Bildpunkten auf die Lage (i) darstellt, auf die die Elementaroperation $\varphi_i(x,y)$ angewendet wird,
Ii[Pi(x,y)] die zusammengesetzte Funktion ist, welche die Bildeinführung übersetzt,
$\gamma_i(x,y)$ eine homogene Funktion einer chromatischen Funktion ist, welche eine Funktion der an diesem Punkt (x,y) bewirkten Farbtransformation darstellt, wobei diese Funktion Werte außerhalb des chromatischen Raumes (negativer Wert) annehmen kann, und wobei jeder der Ausdrücke $\beta_i$Ii[Pi(x,y)] von $\gamma_i(x,y)$ eine Nullfunktion sein kann, während der Ausdruck $\alpha_i(x,y)$ $\varphi_{i-1}$

(x,y) für alle Punkte (x,y) niemals eine Nullfunktion sein kann,

- man die Elementaroperation zusammensetzt, um eine Funktion zu erhalten, welche die i ersten Elementaroperationen darstellt, so daß man eine Funkktion erhält, deren Parameter in allen Punkten des Auflösungsgitters definiert sind durch

$$\sum_{j=1}^{j=q} \alpha_j(x,y) \cdot I_j[P_j(x,y)] + \gamma(x,y). \qquad (2)$$

wobei q die Anzahl der eingeführten Bilder ist und in dieser Gesamtfunktion:

| | |
|---|---|
| $\alpha_j(x,y)$ | ein Skalar analog zum Skalar $\alpha_i(x,y)$ einer Elementaroperation ist, |
| $I_j$ | ein einzuführendes Bild j darstellt, |
| $P_j(x,y)$ | eine Einführfunktion analog zu den vorangehenden Einführfunktionen Pi(x,y) ist, |
| $\gamma(x,y)$ | eine chromatische Funktion analog zu den chromatischen Funktionen $\gamma_i(x,y)$ ist, |

- man erneut in Zwischenpunkten die Gesamtfunktion durch funktionelle Interpolation der an den Punkten des Auflösungsgitters gebildeten Gesamtfunktion berechnet, d.h. die Funktionen $\alpha_j$, $P_j$, $\gamma$, und man die Funktionen $I_j$ aufrechterhält, wobei diese Zwischenpunkte von der Auflösung abhängen, die das zu erzielende Bild bieten soll,
- nach Durchführung aller dieser Operationen an den Funktionen bis zu diesem Zeitpunkt man zur Erzielung des endgültigen Bildes die Pixels in jedem zu erhaltenden Punkt berechnet, indem man den Wert der Funktion in diesen Punkten (Daten) berechnet.

## Claims

1. Method of processing an image in a computer system with a view to obtaining an image intended for display or for printing, according to which each elementary operation is monitored by displaying the result of this operation on a monitor, which process is characterised in that:

   - the original image which is to be processed is sampled along a resolution grid and, of this set of points of this image, only a number of points which is at most equal to the number of points which may be displayed on the monitor is retained;

   - the processing to be performed on the image is broken down into recurrent elementary operations, each of which has been broken down into three parts, and giving, on the basis of the result of the preceding elementary operation (layer i-1), a new result (layer i), these three parts added to one another representing:

     - first, the recovery in the new layer (i) of a point (x, y) of colour from the previous layer (i-1) with a weighting ($\alpha_1$) of from 0 to 100% in positive or negative values;

     - the second part representing the importation of an exterior image (Ii) into the layer i, i.e. the importation of a point of colour from the image (Ii), after chromatic and geometrical transformation [Pi(x, y)] of this point to add it to the point (x,y) of colour of the layer (i), the significance of replacing this point of the layer (i) with this imported point from the image (Ii) being defined by a scalar [$\beta_1$(x, y)] having positive or negative values from 0 to 100%;

     - the third part being a chromatic modification [$\gamma_1$ (x, y)] which is performed on the point (x, y) of the layer (i);

   each elementary operation (i) being defined by the equation taking into consideration the preceding elementary operation (i-1):

$$\varphi_i(x,y) = \alpha_i(x,y) \cdot \varphi_{i-1}(x,y) + \beta_i(x,y) \cdot I_i[P_i(x,y)] + \gamma_i(x,y)$$

in which:

| | |
|---|---|
| $\alpha_1$ (x, y) | is a scalar function of the point (x, y) translating the presence, at this point, of the image resulting from the previous elementary operation $\varphi_{i-1}(x,y)$; |
| $\varphi_{i-1}(x,y)$ | is a function representing the previous elementary operation; |
| $\beta_i(x,y)$ | is a scalar function translating the presence at the point (x, y) of the point corresponding to the imported image; |
| Ii | represents the imported image formed by a chromatic function defined in a set of points; |
| Pi(x,y) | is the image importation function representing the geometrical chromatic transfer of one point of the set of points of the image to the layer (i) to which the elementary operation $\varphi_i$(x, y,) is applied; |
| Ii[Pi(x,y)] | is the compound function translating the importation of the image; |
| $\gamma_i$(x,y] | is a function which is homogeneous to a chromatic function representing a colour transformation function performed on the point (x, y), this function being able to assume values outside the chromatic space (negative value); |

it being possible for each of the terms $\beta_i$Ii[Pi(x,y)] and $\gamma_i$(x,y) to be a nil function whereas the term $\alpha_1(x,y)\ \varphi_{i-1}$ (x,y) is never a nil function for all the points (x, y)

- the elementary operations are arranged to obtain a function representing the i first elementary operations to obtain a function the parameters of which are defined at all the points of the resolution grid

$$\sum_{j=1}^{j=q} \alpha_j(x,y) \cdot I_j[P_j(x,y)] + \gamma(x,y) \qquad (2)$$

q = number of imported images,
in this global function:

| | |
|---|---|
| $\alpha_j$ (x,y) | is a scalar analogous to the scalar $\alpha_i$(x, y) of an elementary function; |
| $I_j$ | represents an image j to be imported; |
| $P_j$ (x,y) | is an importation function analogous to the preceding importation functions Pi(x,y); |
| $\gamma$(x,y) | is a chromatic function analogous to the chromatic functions $\gamma_i$(x,y); |

- the global function is recalculated at intermediate points by functional interpolation of the global function defined at the points of the resolution grid, i.e. the functions $\alpha_j$,$P_j$, $\gamma$ and the functions $I_j$ are maintained, these intermediate points depending on the resolution which the image to be obtained must have,
- all the operations having being performed up to this moment on the functions, and to obtain the final image, the pixels are calculated at each point to be obtained, by calculating the value of the function at these points (data). the function at these points (data).